Europäisches Patentamt

European Patent Office

Office européen des brevets

(11) Veröffentlichungsnummer : **0 394 677 B1**

(19)

(12) # EUROPÄISCHE PATENTSCHRIFT

(45) Veröffentlichungstag der Patentschrift :
**19.02.92 Patentblatt 92/08**

(21) Anmeldenummer : **90105556.6**

(22) Anmeldetag : **23.03.90**

(51) Int. Cl.$^5$ : **B01J 21/06,** B01J 35/10,
B01J 37/00, C04B 35/46,
C04B 38/00

(54) **Presslinge auf Basis von pyrogen hergestelltem Titandioxid, Verfahren zu ihrer Herstellung sowie ihre Verwendung.**

(30) Priorität : **27.04.89 DE 3913938**

(43) Veröffentlichungstag der Anmeldung :
**31.10.90 Patentblatt 90/44**

(45) Bekanntmachung des Hinweises auf die
Patenterteilung :
**19.02.92 Patentblatt 92/08**

(84) Benannte Vertragsstaaten :
**BE CH DE ES FR GB IT LI NL**

(56) Entgegenhaltungen :
**DE-A- 3 217 751**
**DE-A- 3 803 894**
**US-A- 4 482 643**

(73) Patentinhaber : **Degussa Aktiengesellschaft**
**Weissfrauenstrasse 9**
**W-6000 Frankfurt am Main 1 (DE)**

(72) Erfinder : **Deller, Klaus, Dr.**
**Friedhofstrasse 47**
**W-6452 Hainburg (DE)**
Erfinder : **Despeyroux, Bertrand, Dr.**
**Kleinfeller Strasse 3**
**W-6450 Hanau (DE)**
Erfinder : **Krause, Helmfried**
**Odenwaldstrasse 39**
**W-6458 Rodenbach (DE)**

EP 0 394 677 B1

**Beschreibung**

Die Erfindung betrifft Preßlinge auf Basis von pyrogen hergestelltem Titandioxid, das Verfahren zur Herstellung der Preßlinge aus pyrogen hergestelltem Titandioxid sowie deren Verwendung als Katalysatorträger oder Katalysator.

Pyrogen hergestelltes Titandioxid wird durch Hochtemperaturhydrolyse, einer verdampfbaren Titanverbindung, in der Regel Titantetrachlorid, in einer Knallgasflamme hergestellt. Dieses Verfahren wird in der DE-PS 870 242 (1953) beschrieben. Die entstehenden Produkte haben überwiegend Anatasstruktur. Sie sind hydrophil, sehr rein und äußerst feinteilig. Die Primärteilchen (DIN 53 206) zeigen in elektronenmikroskopischen Aufnahmen Kugelform und Durchmesser von 10 - 100 nm. Ein im Handel befindliches Produkt hat eine mittlere Primärteilchengröße von 30 nm. Definierte Agglomerate (nach DIN 53 206) existieren nicht. Die Oberfläche der Teilchen ist glatt und porenfrei. Es besteht nur eine äußere, leicht zugängliche Oberfläche. Die spezifische Oberfläche nach BET kann - je nach Produktionsbedingungen- zwischen 20 und 100 $m^2$ / g liegen. Das erwähnte Handelsprodukt weist eine spezifische Oberfläche von 50 ± 15 $m^2$ / g auf.

Aufgrund der hohen Reinheit, der hohen spezifischen Oberfläche und des Fehlens von Poren wird pyrogen hergestelltes Titandioxid als Titandioxid-Komponente oder als Trägermaterial in Katalysatorsystemen eingesetzt (V. Rives-Arnau, G. Munuera, Appl. Surface Sci. 6 (1980) 122; N. K. Nag, T. Fransen, P. Mars, J. Cat. 68, 77 (1981); F. Solymosi, A. Erdöhelyi, M. Kocsis, J. Chem. Soc. Faraday Trans 1, 77, 1003 (1981); D. G. Mustard, C. H. Bartholomew, J. Cat. 67, 186 (1981); M. A. Vannice, R. L. Garten, J. Cat. 63, 255 (1980), M. A. Vannice, R. L. Garten, J. Cat. 66, 242 (1980).

In den aufgeführten Literaturzitaten werden jedoch nur pulverförige Katalysatorsysteme behandelt. Soll pyrogen hergestelltes Titandioxid im technischen Maßstab in Katalysatorsystemen verwendet werden, ist es zweckmäßig, das pulverförmige Produkt in Formkörper zu überführen.

Da pyrogen hergestelltes Titandioxid besonders feinteilig ist, bereitet die Verformung zu Katalysatorträgern Schwierigkeiten.

Aus der DE-OS 31 32 674 ist ein Verfahren zur Herstellung von Preßlingen aus pyrogen hergestelltem Titandioxid bekannt, bei dem Kieselsol als Bindemittel verwendet wird. Als Preßhilfsmittel wird Äthandiol, Glycerin, Erythrite, Pentite oder Hexite eingesetzt. Dieses Verfahren hat den Nachteil, daß bei der großtechnischen Herstellung der Preßlinge ein unerwünschtes "Deckeln" bei den Preßlingen auftritt, d. h., eine obere Schicht löst sich wieder von den Preßlingen.

Zusätzlich enthalten die Formkörper neben $TiO_2$ auch beträchtliche Mengen an $SiO_2$, das aus dem Bindemittel herrührt und die katalytische Wirksamkeit beeinflußt.

Aus der DE-OS 32 17 751 ist die Verpressung von pyrogen hergestelltem Titandioxid bekannt, bei welchem organische Säuren oder sauer reagierende Salze als intermediäre Bindemittel verwendet werden.

Dieses Verfahren hat den Nachteil, daß durch die Behandlung mit organischen Säuren oder sauer reagierenden Salzen die Oberflächenbeschaffenheit des pyrogen hergestellten Titandioxides verändert wird.

Aus der älteren Anmeldung P 38 03 894 sind ebenfalls Titandioxidpreßlinge bekannt.

Der wesentliche Nachteil der bekannten Verfahren besteht darin, daß ein Bindemittel eingesetzt werden muß, das im Preßling verbleibt. Dies führt zur Veränderung der katalytischen Wirkung des hochreinen pyrogen hergestellten Titandioxides.

Verfahren unter Verwendung von gefälltem Titandioxid haben den Nachteil, daß Verunreinigungen durch den Fällprozeß die katalytische Wirkung beeinflussen.

Aufgabe der Erfindung ist ein Preßling aus pyrogen hergestelltem Titandioxid unter Erhaltung der hohen Reinheit des Ausgangsmaterials, d. h., keine Verwendung von Bindemitteln. Weiterhin sollte als $TiO_2$-Phase die Rutilform erreicht werden.

Gegenstand der Erfindung sind Preßlinge auf Basis von pyrogen hergestelltem Titandioxid mit folgenden physikalisch-chemischen Kenndaten:

| | |
|---|---|
| Außendurchmesser | 0,8 - 15 mm |
| BET-Oberfläche nach DIN 66 131 | < 1 - 20 $m^2$/g |
| Porenvolumen | 0,01 - 0,29 $cm^3$/g |
| Porenverteilung | keine Poren < 10 nm mindestens 90 % der Poren im Bereich 10 - 80 nm |
| Bruchfestigkeit | 30 - 500 N/Preßling |
| $TiO_2$-Phase | Rutil 100 % |
| Zusammensetzung | > 99,5 % $TiO_2$ |

Der Außendurchmesser kann vorzugsweise 0,8 bis 1,8 mm betragen.

Die Länge der Preßlinge kann vorzugsweise 1 bis 15 mm betragen.

Ein weiterer Gegenstand der Erfindung ist ein Verfahren zur Herstellung der Preßlinge auf Basis von pyrogen hergestelltem Titandioxid mit folgenden pyhsikalisch-chemischen Kenndaten:

Außendurchmesser 0,8 - 15 mm
BET-Oberfläche nach
DIN 66 131 < 1 - 20 m$^2$/g
Porenvolumen 0,01 - 0,29 cm$^3$/g
Porenverteilung keine Poren < 10 nm mindestens 90 % der Poren im Bereich 10 - 80 nm
Bruchfestigkeit 30 - 500 N/Preßling
TiO$_2$-Phase Rutil 100 %
Zusammensetzung > 99,5 % TiO$_2$

welches dadurch gekennzeichnet ist, daß man pyrogen hergestelltes Titandioxid mit Harnstoff, Graphit und Wasser vermischt, kompaktiert, die erhaltene Masse gegebenenfalls bei 80 °C bis 120 °C trocknet und zerkleinert, anschließend extruidert oder tablettiert und die erhaltenen Preßlinge bei einer Temperatur von 710 °C bis 1000 °C während eines Zeitraumes von 0,5 bis 6 Stunden tempert.

In einer besonderen Ausführungsform der Erfindung kann die Mischung vor dem Verpressen die folgende Zusammensetzung aufweisen:

50 -90 Gew.-% Titandioxid, vorzugsweise 65-85 Gew.-%
5 -50 Gew.-% Harnstoff, vorzugsweise 15-30 Gew.-%
0,1- 8 Gew.-% Graphit, vorzugsweise 1- 5 Gew.-%.

Zur Durchführung des erfindungsgemäßen Verfahrens sind prinzipiell alle Mischer oder Mühlen geeignet, die eine gute Homogenisierung ermöglichen, wie z. B. Schaufel-, Wirbelschicht-, Kreisel- oder Luftstrommischer. Besonders geeignet sind Mischer, mit denen eine zusätzliche Verdichtung des Mischgutes möglich ist, z. B.- Pflugscharmischer, Kollergänge, Kugelmühlen und Extruder. Nach der Homogenisierung kann die Masse direkt extrudiert werden oder eine Trocknung bei 80 - 120 °C erfolgen. Die trockene Masse kann zu einem rieselfähigen Pulver vermahlen werden. Das Trocknen und Vermahlen - Maßnahmen, die bevorzugt durchgeführt werden - des voluminösen und feinteiligen pyrogen hergestellten Titandioxidpulvers führt zusammen mit den Tablettierhilfsmitteln und Porenbildnern zu einem homogenen, rieselfähigen Pulver, das zu Formkörpern mit verbesserten physikalischen Eigenschaften bezüglich der Bruchfestigkeit und des Abriebs führt. Die Herstellung der Preßlinge kann auf Strangpressen, Stempelpressen, Exzenterpressen oder Rundlaufpressen sowie auch auf Kompaktoren erfolgen.

Durch Variation der Einsatzstoffmengen, des Preßdruckes und der Temperung kann die Bruchfestigkeit, die spezifische Gesamtoberfläche und das Porenvolumen in einem gewissen Rahmen verändert werden.

Die erfindungsgemäßen Preßlinge können in den verschiedensten Formen, wie z. B. zylindrisch, kugelförmig, ringförmig mit einem Außendurchmesser von 0,8 - 15 mm hergestellt werden.

Die erfindungsgemäßen Preßlinge können entweder direkt als Katalysatoren oder als Katalysatorträger, nachdem die Formkörper während oder nach ihrer Herstellung mit einer Lösung einer katalytisch wirksamen Substanz getränkt und gegebenenfalls durch eine geeignete Nachbehandlung aktiviert wurden, Verwendung finden.

Insbesondere lassen sich Preßlinge aus pyrogen hergestelltem Titandioxid als Träger oder als Katalysator in der Fischer-Tropsch-Synthese und in der Formaldehyd-Herstellung (Dehydrierung von Methanol) besonders gut verwenden.

Die erfindungsgemäßen Preßlinge weisen die folgenden Vorteile auf:
Sie besitzen die gleiche chemische Zusammensetzung des Ausgangsmaterials (pyrogen hergestelltes Titandioxid).
Hohe Reinheit.
Sie enthalten keine Zusätze, wie Bindemittel, Harnstoff oder Graphit.
Große Festigkeit.
Das Titandioxid liegt in der Rutil-Modifikation vor. Der überwiegende Anteil der Poren liegt im Mesoporenbereich.
Keine Poren < 10 nm.

Die erfindungsgemäßen Preßlinge enthalten keine zusätzlichen Stoffe, weil bei dem Herstellverfahren nur Harnstoff und Graphit als Porenbildner bzw. Gleitmittel verwendet wird. Beide Substanzen werden jedoch nach dem Verformvorgang bei der Kalzinierung (Temperung) entfernt.

Beispiele

Die BET-Oberfläche wird gemäß DIN 66 131 mit Stickstoff bestimmt.
Das Porenvolumen wird rechnerisch aus der Summe der Mikro-, Meso- und Makroporen bestimmt.
Die Bruchfestigkeit wird mittels des Bruchfestigkeitstesters der Firma Erweka, Typ TBH 28, bestimmt. Der

EP 0 394 677 B1

Preßdruck wird dabei über die Spannung des Motors solange kontinuierlich hochgeregelt, bis der Formkörper (Tablette, Extrudat, Kugel etc.) bricht. Im Moment des Bruches wird die aufgewandte Kraft digital angezeigt.

Die Bestimmung der Mikro- und Mesoporen erfolgt durch Aufnahme einer $N_2$-Isotherme und deren Auswertung nach BET, der Boer und Barret, Joyner, Halenda.

Die Bestimmung der Makroporen erfolgt durch das Hg-Einpreßverfahren.

Die Titandioxid-Phasenbestimmung erfolgt durch Röntgenaufnahmen im Diffraktometer.

Beispiel 1

70 % Titandioxid P 25
25 % Harnstoff
5 % Graphit werden unter Zusatz von Wasser kompaktiert, bei 100 °C über 24 Std. getrocknet und zu einem rieselfähigen Pulver zerkleinert.

Die Herstellung der Strangpreßlinge erfolgt auf einem Extruder.

Die Rohstrangpreßlinge werden bei 720 °C während 6 Std. getempert. Die erhaltenen Preßlinge weisen die folgenden physikalisch-chemischen Kenndaten auf:

| | |
|---|---|
| Außendurchmesser | 1,2 mm |
| BET-Oberfläche nach DIN 66 131 | 12 m²/g |
| Porenvolumen | 0,23 ml/g |
| Porenverteilung | keine Poren < 10 nm ∅ 95 % der Poren im Bereich von 10 - 80 nm ∅ |
| Bruchfestigkeit | 32 N/Strangpreßling |
| Schüttgewicht | 880 g/l |
| Zusammensetzung | > 99,5 % $TiO_2$ |
| $TiO_2$-Phase | Rutil 100 % |

Beispiel 2

Mischung und Herstellung der Rohstrangpreßlinge gemäß Beispiel 1.

Die Rohstrangpreßlinge werden bei 800 °C während 4 Std. getempert. Die erhaltenen Preßlinge weisen die folgenden pyhsikalisch-chemischen Kenndaten auf:

| | |
|---|---|
| Außendurchmesser | 1 mm |
| BET-Oberfläche nach DIN 66 131 | 5 m²/g |
| Porenvolumen | 0,09 ml/g |
| Porenverteilung | keine Poren < 10 nm ∅ 96 % der Poren im Bereich von 10 - 80 nm ∅ |
| Bruchfestigkeit | 46 N/Preßling |
| Schüttgewicht | 1.250 g/l |
| Zusammensetzung | > 99,5 % $TiO_2$ |
| $TiO_2$-Phase | Rutil 100 % |

Beispiel 3

Mischung und Herstellung der Rohstrangpreßlinge gemäß Beispiel 1.

Die Rohstrangpreßlinge werden bei 900 °C während 2 Std. getempert. Die erhaltenen Preßlinge weisen die folgenden physikalisch-chemischen Kenndaten auf:

| | |
|---|---|
| Außendurchmesser | 1 mm |
| BET-Oberfläche nach DIN 66 131 | 1 m²/g |
| Porenvolumen | 0,04 ml/g |
| Porenverteilung | keine Poren < 10 nm ∅ 97 % der Poren im Bereich von 10 - 80 nm ∅ |
| Bruchfestigkeit | 65 N/Preßling |
| Schüttgewicht | 1.450 g/l |
| Zusammensetzung | > 99,5 % $TiO_2$ |
| $TiO_2$-Phase | Rutil 100 % |

Beispiel 4

4

70 %  Titandioxid P 25

25 %  Harnstoff

5 %  Graphit

werden in einem Taumelmischer homogenisiert.

Die Herstellung der Strangpreßlinge erfolgen auf einem Extruder.

Die Rohstrangpreßlinge werden bei 720 °C während vier Stunden getempert. Die erhaltenen Preßlinge weisen die folgenden physikalisch-chemischen Kenndaten auf:

| | |
|---|---|
| Außendurchmesser | 1,3 mm |
| BET-Oberfläche nach | |
| DIN 66 131 | 13 m²/g |
| Porenvolumen | 0,27 ml/g |
| Porenverteilung | keine Poren < 10 nm $\varnothing$ 94 % der Poren im Bereich von 10 - 80 nm $\varnothing$ |
| Bruchfestigkeit | 31 N/Preßling |
| Schüttgewicht | 780 g/l |
| Zusammensetzung | > 99,5 % $TiO_2$ |
| $TiO_2$-Phase | Rutil 100 % |

Beispiel 5

72 %  Titandioxid

25 %  Harnstoff

3 %  Graphit werden unter Zusatz von Wasser kompaktiert, bei 100 °C über 24 Std. getrocknet und zu einem rieselfähigen Pulver zerkleinert.

Die Tablettierung erfolgt mittels einer Excenterpresse.

Die Rohtabletten werden bei 900 °C während 4 Stunden getempert. Die erhaltenen Preßlinge weisen die folgenden physikalisch-chemischen Kenndaten auf:

| | |
|---|---|
| Außendurchmesser | 5 mm |
| BET-Oberfläche nach | |
| DIN 66 131 | 6 m²/g |
| Porenvolumen | 0,12 ml/g |
| Porenverteilung | keine Poren < 10 nm $\varnothing$ 95 % der Poren im Bereich von 10 - 80 nm $\varnothing$ |
| Bruchfestigkeit | 470 N/Preßling |
| Schüttgewicht | 1.700 g/l |
| Zusammensetzung | > 99,5 % $TiO_2$ |
| $TiO_2$-Phase | Rutil 100 % |

Als Titandioxid wird in den Beispielen das pyrogen hergestellt Titandioxid P 25 verwendet, das mit den folgenden physikalisch-chemischen Kenndaten charakterisiert wird:

| | | TiO$_2$ P 25 |
|---|---|---|
| Oberfläche nach BET | m$^2$ / g | 50 ± 15 |
| Mittlere Größe der Primärteilchen | nm | 30 |
| Stampfdichte [1] normale Ware | g / l | ca. 150 |
| Trocknungsverlust [2] (2 Std. bei 105 °C) | % | < 1,5 |
| Glühverlust [2] [5] (2 Std. bei 1000 °C) | % | < 2 |
| pH-Wert [3] (in 4 %iger wäßriger Dispersion) | | 3 – 4 |
| SiO$_2$ [5] | % | < 0,2 |
| Al$_2$O$_3$ [6] | % | < 0,3 |
| Fe$_2$O$_3$ [6] | % | < 0,01 |
| TiO$_2$ [6] | % | > 99,5 |
| HCl [6] [8] | % | < 0,3 |

[1] nach DIN 53 194

[2] nach DIN 55 921

[3] nach DIN 53 200

[5] bezogen auf die 2 Stunden bei 105 °C getrocknete Substanz

[6] bezogen auf die 2 Stunden bei 100 °C geglühte Substanz

[8] HCl-Gehalt ist Bestandteil des Glühverlustes

**Patentansprüche**

1. Preßlinge auf Basis von pyrogen hergestelltem Titandioxid mit den folgenden physikalisch-chemischen Kenndaten:

| | |
|---|---|
| Außendurchmesser | 0,8 - 15 mm |
| BET-Oberfläche nach | |
| DIN 66 131 | < 1 - 20 m²/g |
| Porenvolumen | 0,01 - 0,29 cm³/g |
| Porenverteilung | keine Poren < 10 nm mindenstends 90 % der Poren im Bereich 10 - 80 nm |
| Bruchfestigkeit | 30 - 500 N/Preßling |
| TiO₂-Phase | Rutil 100 % |
| Zusammensetzung | > 99,5 % TiO₂ |

2. Verfahren zur Herstellung der Preßlinge auf Basis von pyrogen hergestelltem Titandioxid gemäß Anspruch 1, dadurch gekennzeichnet, daß man pyrogen hergestelltes Titandioxid mit Harnstoff, Graphit und Wasser vermischt, kompaktiert, die erhaltene Masse gegebenenfalls bei 80 °C bis 120 °C trocknet und zerkleinert, anschließend extrudiert oder tablettiert und die erhaltenen Preßlinge bei einer Temperatur von 710 °C bis 1000 °C während eines Zeitraumes von 0,5 bis 6 Stunden tempert.

3. Verwendung der Preßlinge nach Anspruch 1 als Katalysator oder Katalysatorträger.

**Claims**

1. Mouldings based on pyrogenic titanium dioxide having the following physico-chemical characteristics:

| | |
|---|---|
| External diameter | 0.8 - 15 mm |
| BET surface acc. to | |
| DIN 66 131 | < 1 - 20 m²/g |
| Pore volume | 0.01 - 0.29 cm³/g |
| Pore distribution | no pores < 10 nm at least 90% of the pores in the 10 - 80 nm range |
| Breaking strength | 30 - 500 N/moulding |
| TiO₂ phase | rutile 100% |
| Composition | > 99.5% TiO₂. |

2. A process for the production of the mouldings based on pyrogenic titanium dioxide claimed in claim 1, characterized in that pyrogenic titanium dioxide is mixed with urea, graphite and water, the resulting mixture is compacted, the compacted material obtained is optionally dried at 80°C to 120°C and size-reduced, subsequently extruded or pelleted and the mouldings obtained are heated for 0.5 to 6 hours at a temperature of 710°C to 1,000°C.

3. The use of the mouldings as claimed in claim 1 as a catalyst or catalyst support.

**Revendications**

1. Pièces pressées à base de dioxyde de titane produit pyrogène ayant les caractéristiques physico-chimiques suivantes :

| | |
|---|---|
| Diamètre extérieur | 0 ,8 - 15 mm |
| Surface BET selon la norme | |
| DIN 66 131 | < 1 - 20 m²/g |
| Volume des pores | 0,01 - 0,29 cm³/g |
| Répartition des pores | aucun pore < 10 nm au moins 90 % des pores dans la zone de 10 - 80 nm |
| Résistance à la rupture | 30 - 500 N/ pièce pressée |
| Phase de TiO₂ | Rutile à 100 % |
| Composition | > 99,5 % TiO₂ |

2. Procédé de production de pièces pressées à base de dioxyde de titane produit pyrogène selon la revendication 1, caractérisé en ce que le dioxyde de titane produit pyrogène est mélangé avec de l'urée, du graphite et de l'eau, qu'on compacte, qu'on sèche la masse obtenue éventuellement à 80°C à 120°C et qu'on la broie, ensuite qu'on l'extrude ou qu'on la comprime et qu'on recuise les pièces pressées obtenues à une température allant de 710°C à 1000°C pendant une durée de 0,5 à 6 heures.

3. Utilisation des pièces pressées selon la revendication 1 comme catalyseur ou support de catalyseur.